# EUROPEAN PATENT APPLICATION

(11) **EP 0 775 608 A1**
(43) Date of publication of application: **28.05.1997**
(21) Application number: 95926526.5
(22) Date of filing: 31.07.1995
(51) Int. Cl.: B60P 3/075, B61B 13/00, B61D 3/18

(54) **WHEEL FIXING DEVICE, PALLET/TRUCK AND WHEEL FIXING METHOD, AUTOMATIC WHEEL FIXING DEVICE AND MODE INTERCHANGE**

(30) Priority: 18.08.1994 JP 942285/94
(71) Applicant: Minakami, Hiroyuki, Kobe-shi, Hyogo 658 (JP); Minakami, Motoyuki, Tsukuba-shi, Ibaraki 350 (JP)
(72) Inventor: Minakami, Hiroyuki, Kobe-shi, Hyogo 658 (JP); Minakami, Motoyuki, Tsukuba-shi, Ibaraki 350 (JP)
(74) Representative: Jackson, David Spence
(86) International application number: PCT/JP95/01518
(87) International publication number: WO 96/05981

(57) **Abstract**

Method and device are provided for simply fixing wheels of a vehicle to a pallet/truck, a floor or the like by using belts, wheel side supporting apparatuses, belt fixtures and the like, whereby not only is the vehicle fixed quickly to the pallet/truck, the floor or the like but also a traffic system can be constructed in which the vehicle fixed to the pallet/truck is transported or run at high speed. Provided on a wheel fixing floor side are a belt having a fastener provided at one end thereof and connected at the other end to a retractor in such a manner as to be installed therein, a wheel side supporting apparatus for supporting a wheel from the side thereof connected to the wheel fixing floor side by means of a hinge at one end thereof, having the retractor provided at the other end and having a mechanism in which the whole thereof is installed in the wheel fixing floor side, and a fixture having a mechanism for locking/unlocking the fastener provided at the one end of the belt.

## Description

### FIELD OF THE INVENTION

This invention is related to the fixation of the wheel (in this invention described below except any further explanation, the wheel includes the tire, steel wheel and roller) of the vehicle (in this invention described below except any further explanation, the vehicle means automobiles including cars and trucks, coach, vans and wheel attached container) to some certain place, the floor or on the pallet (in this invention described below except further explanation, the pallet includes the pallet itself, rack and the wheel attached container), the apparatus for the fixation, particularly the pallet for the fixation, the method of the fixation, automated fixation system and apparatus, mode-interchange for loading the vehicle to the pallet or unloading the vehicle from the pallet. Furthermore, this invention apparatus and the system.

### BACKGROUND OF THE INVENTION

When the vehicle needs to be fixed, usually, a triangle apparatus is set in front and in back of the wheel. Sometimes a chain is used to connect the vehicle to the floor of the pallet. Also, when the vehicle is loaded onto the parking area, sometimes an uneven or friction device is used to hold the vehicle on the pallet. For example, the Japanese Patent Provisional Publication No. 146684/94 adheres the bumper to the pallet.

Usually, when the vehicle needs to be fixed, the general form of transference or shipping appears as the train system or piggyback system.

Now, the usual style of fixing an automobile is slow and cumbersome, using the triangle and chain with a turn buckle. Each apparatus must be set individually. In order to minimize this clumsy manual operation within the piggyback system, the car rack is used.

When this device is applied to a multiple level parking garage, we see a vast difference in degrees of automobile security. The current method for securing an automobile on a parking pallet is basically a hand brake or emergency brake within the automobile. The safety level, therefore, depends upon the strength and effectiveness of each automobiles brake system.

The Japanese Provisional Patent Application No. 59270/91 proposes the installation of the indented area, for the lower part of the tire, on the pallet in the garage parking system. In this case, the proposed system may be able to fix the tire only for slow moving pallets. However, there are inevitable problems within this proposed system because these indentions do not guarantee tightness while fixing tire.

Actually the only fixing force comes from the friction between the tire and the indented area in the pallet floor. The tire is stopped only by the vehicle's brake. This proposed system only functions when the pallet moves slowly in a parking setting. In other words, the use of this method is limited to times of negligible acceleration or deceleration. For example, in the parking system, the pallet moves less than 10 Km/Hr. If the pallet moves faster the system gains a higher acceleration or deceleration rate. The friction between the tire and the surface of the floor of the pallet becomes insufficient to hold the tire and vehicle. In a high speed scenario, the automobile may easily come free of the pallet.

To solve the above mentioned problems, a new method is introduced. The proposed Japanese Patent Provisional Publication No. 193733/90 system incorporates a harness which is attached to the wheel. This apparatus is connected to a harness web and is attached over the wheel. Basically, in this method, the rail wheel is wrapped around by the harness web by fixing the wheel fixing body on the rail. Also, because the mechanism of the wheel fixing is complicated, this method is not a good method except for the railroad system in the United States of America. The whole procedure must start with fixing the wheel fixing body on the rail road. Thus, the process and mechanisms are complicated, cumbersome and time consuming.

Also, when the method of fixing the automobile utilises its bumper as seen in Japanese Provisinal Patent Publication 146648/94, the fixing apparatus becomes large. As a result, the pallet's thickness becomes greater. According to the above proposed method, to store the pallet/vehicle or the apparatus, which is defined as the movement stopper in the above Japanese Provisional Patent Publication, a large space is needed. Consequently, the cost of fixing and the labour cost become higher.

In the case of fixing the automobile to the floor of the automobile cargo ship, the ship shakes up and down, right and left. Thus, the automobile needs to be tied by rope or chain. In such a case, each automobile needs to be tied by hand. Therefore, the labour cost becomes higher.

In the case of transportation where a pallet/vehicle carries the automobile to be transported, the thickness of the pallet/vehicle is an important issue. If the thickness becomes greater due to the fixing apparatus, the total handling cost of the transportation becomes high. Because of the greater thickness of the pallet/vehicle, more storing space is required. This problem results in a requirement for more stock yard for the pallets/vehicles in the transportation system. According to the proposed method, because an anchor protrudes from the floor, stacking of pallets/vehicles becomes difficult to do. Even if it is possible to stack, the stack becomes unstable.

Furthermore, usual fixing methods such as utilising chain and turn-buckle are not easy to use, because each automobile has a different position for the hook. Therefore, in order to accommodate each automobile*'*s need, the operation is handled manually. This means that the mechanisation or automation of this procedure is difficult.

Because of this problem, the fixing procedure is completed manually and consumes heavy labour costs.

Usual fixing methods such as utilising chain and turn-buckle are difficult fixing work because the chain or turn-buckle can be stored in the floor of the fixing surface. When the automobile is fixed, these fixing apparatus needs to be put in order.

In the case of a piggy back carrying system, the automobile is carried on the cargo train and it is fixed manually. Also, when the automobile must be driven onto the cargo train, the driver must pay special attention to driving on, because the gap of the height of the cargo is significant. This causes driving on to a take long time. Thus, at the point at which the travelling (driving) mode is changing, the traffic becomes congested.

Moreover, in case of carrying an automobile by pallet, usually there is no driver or passenger riding in it. Therefore, so far the issue of comfort of travelling has not been critical, even if the automobile is fixed by the anchored chain or turn-buckle. When the automobile is not fixed by its wheel, the automobile*'*s body must be tied firmly. Thus, the suspension of the automobile is sacrificed and this causes riding to feel bad. Also, the distance of the tying length is verified by the shaking of the travelling pallet, and the tension of the tie may be loosened.

This invention is made to solve the problems described above. Even if the automobile carrying and fixing surface (such as a pallet or vehicle, cargo ship floor or piggy back cargo train floor) moves too quickly, this invention is able to provide a system which fixes automobile firmly. Also, the thickness remains thin, it is easy to store, simple and prompt fixing is achieved and procedure can be automated. This invention provide such a fixing apparatus and the method of the fixing.

In addition, this invention provides automated wheel fixing apparatus by applying this invention wheel fixing apparatus and the fixing method. Also, the invention provides a mode-interchange in which the automobile can change its travelling (driving) mode by fixing or unfixing the automobile to the pallet/vehicle automatically.

### DETAIL DESCRIPTION OF THE INVENTION

In order to achieve the objectives described above we must design a new concept. The basic structure consists of a belt and a retractor. The belt ties the wheel down while surrounding the upper circumference of the wheel to the pallet. The belt is attached on both sides of the wheel. Therefore, the wheel is secured.

One of the methods for fixing the wheel will be described henceforth. One end of the belt is equipped with a hook. The other end is part of the retractor system which is rolled into the belt holder apparatus. This end is a fixture and part of the pallet itself.

Other types of method for fixing a wheel to a pallet introduce systems which are free with hooks on each end of the belt. With the new system, the belt emerges from the hatching door, which is part of the pallet, and encircles the top of the wheel and attached on the other side. This belt can be extended and fitted to any size wheel and still provide the same top level of safety. The system is equipped with a reacting device, which determines the specific amount of length required.

This fixing apparatus is similar to the tongue plate device used in an automobile's seat belt system. This means the buckle retractor and insertion tongue, which creates a secure fixing system. The wheel fixation incorporates this idea. Using this system, the benefits arise as the ease with which the wheel is fixed is brought to consideration. The relative smallness of this system adds to the benefits of a small pallet. This system is built within the pallet and therefore does not change the pallet size at all. The aforementioned hatching door provides a smooth surface which is flat when not in use and hence provides for easy loading and unloading of the vehicle.

With this new method, the wheel is fixed by the belt. Therefore, during this tight fixation, the belt must fasten firmly, otherwise, the fixation will loosen. Also, when a belt is not in use, it becomes an obstacle. Therefore, the retractor is installed which rolls the belt into inside the pallet.

When the belt is rolled over the wheel down towards the floor, in order to prevent slippage of the belt from the wheel surface, a nonskid material is used. In this method, the fixing becomes more secure.

In order to prevent sliding of belt to the sides of the wheel, application of the nonskid material can be used as it is described above. However, another method is available, such as the utilization of a side belt for the wheel. This is different from the roll down belt. When the main and side belts are connected by a harness, the side belt pulls the main belt. Therefore, the main belt is always tense by way of the side belt. Thus, the fixation becomes firm, and this prevents side-ways sliding.

In this invention, the wheel-side support apparatus is proposed as one of the necessary elements for the fixation apparatus. This prevents wheel-side direction sliding. Because a complete fixation cannot be provided by only tightening the belt, the specially made wheel-side supporting apparatus is necessary, and the complete fixation can be provided by the adoption of the wheel-side supporting apparatus.

To support the wheel from the side, one method is that an air bag is installed in the floor. The air bag is put inside the door, and when it is needed, it is blown up and set in place to support the side of the wheel. After the automobile is loaded on the floor in its certain space, compressed gas (such as air) is put into the air bag, then the air bag supports the side of the wheel. After setting the automobile on the floor, one edge of the wheel-side supporting apparatus is raised from the floor surface, and the other edge is connected by the hinge, which is fixed in the floor. Then, the arm supports the side of the wheel and prevents the sliding of the wheel as well. Until the vehicle is loaded onto the pallet, the fixing apparatus is put in the floor.

There are two directions for opening and closing the aforementioned wheel-side supporting apparatus. One is parallel to the pallet driving direction, the other is perpendicular to the pallet driving direction. Both provide the same result. When the wheel-side supporting apparatus is opened from the floor using the parallel arm, the wheel-side supporting apparatus itself will become the supporting arm. In addition, the air bag supporting the wheel can be put on the arm to prevent side way sliding.

There are some methods for extending the arm from the floor. One method is that one arm per wheel is extending, another method is that of two arms per wheel being extended at the same time. With both methods, the retractor is installed on the edge of the arm, the belt is pulled from the retractor, then the belt is pulled over the wheel, pushing the wheel down to the floor. The belt is then fixed to the floor or the edge of the other arm. According to this method, the wheel is not only pushed down to the floor by the belt itself, but also the side of the wheel is fixed by the wheel-side supporting apparatus (arm). Therefore, the wheel is fixed firmly to the floor.

Basically, to prevent side way sliding of the wheel, there are other methods, such as installing air bags in the floor. With this method, when wheel is in place the air bag is inflated to hold the wheel. Another method is that of the air bag surrounding the wheel. The air bag is then inflated to hold the wheel. The point is that though there are many options to choose from to hold the wheel to prevent side way sliding. In order to prevent lateral sliding more securely, this invention and other available methods can be introduced. The followings are the example of this invention's procedures:

A process at least comprising the following procedure, in the method of using the apparatus which has the belt one end of which has tongue plate, and the other end of which is connected to said retractor.
(a) Pulling the belt from the retractor, which is installed in the floor.
(b) Rolling the belt over the wheel by pulling the belt out from the retractor.
(c) Fixing one end of the belt to the other side of the wheel by rolling the belt over the wheel.

A process at least comprising the following procedure, in the method of using the apparatus which has the belt on which both ends have tongue plates.
(a) Fixing the tongue plate which is installed on one end of the belt to the buckle which is installed in the floor.
(b) Rolling said belt over the wheel by pulling said belt out from the retractor.
(c) Fixing one end of the belt to the other side of the wheel by rolling the belt over the wheel.

A process at least comprising the following procedure, in the method of using the apparatus which has the belt one end of which has tongue plate, and the other end of which is connected to the retractor.
(a) Raising up one end of the wheel-side supporting apparatus from the floor as the other end of wheel-side supporting apparatus is a fulcrum hinge.
(b) Rolling the belt over the wheel by pulling the belt out from the retractor which is installed in the floor or on the wheel-side supporting apparatus.
(c) Pulling and rolling the belt over the wheel as the tongue plate is leading the belt.
(d) Fixing said tongue plate to the buckle which is installed in the floor, as the belt is being pulled out from said retractor, and rolling the belt over the wheel.

A process at least comprising the following procedure, in the method of using the apparatus which has the belt both ends of which have tongue plates thereon.
(a) Raising up one end of the wheel-side supporting apparatus from the floor as the other end of wheel-side supporting, apparatus is a fulcrum hinge.
(b) Fixing the tongue plate to said buckle which is installed in the floor or on the wheel-side supporting apparatus.
(c) Pulling and rolling the belt over the wheel as the tongue plate is leading the belt, which belt is installed on the opposite side of the belt from which the tongue plate is installed.
(d) Fixing the tongue plate to the buckle which is installed in the floor or on the wheel-side supporting apparatus, as the belt is being pulled out from the retractor, and the belt is rolled over the wheel.

A process at least comprising the following procedure, in the method of using the apparatus which has the belt one end of which has tongue plate, and the other end of which is connected to the retractor, and wheel-side supporting apparatus which has the air bag.
(a) Raising up one end of the wheel-side supporting apparatus from the floor as the other end of wheel-side supporting apparatus is a fulcrum hinge.
(b) Inflating the air bag which is installed in the wheel-side supporting apparatus.
(c) Rolling the belt over the wheel by pulling the belt out from the retractor which is installed in the floor or on the wheel-side supporting apparatus.
(d) Pulling and rolling the belt over the wheel as the tongue plate is leading the belt.
(e) Fixing the tongue plate to the buckle, as the belt is being pulled out, and rolling the belt over the wheel.

A process at least comprising the following procedure. in the method of using the apparatus which has the belt both ends of which have tongue plate thereon, and wheel-side supporting apparatus which has the air bag.
(a) Raising up one end of the wheel-side supporting apparatus from the floor as the other end of wheel-side supporting apparatus is a fulcrum hinge.
(b) Inflating the air bag which is installed in the wheel-side supporting apparatus.
(c) Fixing the tongue plate to the buckle which is installed in the floor or on the wheel-side supporting apparatus.
(d) Pulling and rolling the belt over the wheel as the tongue plate is leading the belt, which belt is installed on the opposite side of the belt from the tongue plate is installed.
(e) Fixing the tongue plate to the buckle which is installed in the floor or on the wheel-side supporting apparatus, as the belt is being pulled out from the retractor, and rolling the belt over the wheel.

In such a transportation system in which each vehicle is put on a pallet, the loaded pallet is mobilized on the guideway. It is better for the fixation procedures to be automated. This is because when many vehicles are to be loaded and unloaded to and from the pallet speed is a necessity

In order to develop a system which is able to load and unload many vehicles in a short period of time automatically, it is proposed that this wheel fixation apparatus is installed along the line outside each wheel. Henceforth, the wheel fixation system is comprised of a positioning device which detects the position of the wheel using an image treatment monitor, a clamping device which grips the stopper or tongue plate by motor driven hands, and a pulling device which secures the belt by motor driven arms. All movement and positioning is regulated by the information which comes from the sensor and regulator.

When using both sides of the wheel-side supporting apparatus at the same time, an air injection mouth is installed on the automatic wheel fixation apparatus to inject compressed air into the air bag. This is installed on the wheel-side supporting apparatus. In this case, a pump and a compressed air tank are installed around the apparatus. The (air) injection mouth is installed on the arm of the apparatus.

Furthermore, this wheel positioning system can be installed in order to adjust the position for fixing the wheel to the floor. In this case, the fixation adjusting system is installed on the support of the wheel fixation apparatus system. The adjustment itself is completed by adjusting the position of the support. Usually the support is installed on the rail system, then the precise positioning is performed by using the screw-bolt, ball thread or converting-screw system. When the screw-bolt or converting-screw system is installed, these screws are turned to adjust the position of the wheel.

In the case of installing the adjusting apparatus on the pallet, a rotary handle is installed on the arm of the apparatus in order to set the position by using the ball thread which is set in the support. In the case of adjusting the position using a rail system, a rail locking system is necessary to fix the position.

As mentioned above, because many vehicles need to be interchanged to be mobilized in the transportation system as quickly as possible, a designated mode-interchange is installed. In the mode-interchange, usually four of the wheel fixation apparatuses per one gate are installed to match the number of the vehicle wheels. When the vehicle is set correctly on the pallet, all four of the apparatuses begin fixing the wheel to the floor simultaneously. For example, a passenger vehicle is placed on the pallet. Four wheels must be fixed to the pallet. Therefore, four of the apparatuses are installed at the gate. After loading the vehicle on the pallet, the arm from the apparatus reaches the retractor. The arm pulls the belt over the tire (wheel). It is then set to the belt stopper to lock it. Doing so, the wheel is firmly fixed on the floor because the wheel is secured to the floor by the belt, and its tension. As described above, the number of apparatuses to be installed is matched to the number of wheels on the vehicle. The vehicle is firmly fixed to the pallet. This is all completed automatically.

This all depends on the type of vehicle, traffic conditions, vehicle size, and the material of the belt selected to meet the load requirements during transportation. Of course, the initial design is to meet the crash force or sustaining force. This is absolutely necessary.

The belt is for fixing and pulling the wheel down to the floor. To be more effective and fix the wheel firmly, getting rid of the looseness of the belt is necessary. Therefore, the material of the belt can be fabric or rubber, which are very flexible. However, based on the history of actual usage and testing to this point, the material of a seat belt is the most desirable.

When the belt is attached to a retractor, the belt is continuously being pulled by the retractor, thus the belt is not loose. However. if a retractor is not attached. it would be better that at least a portion of the belt consist of a flexible (textile) material. In this case. the belt would not be loose because a tension force would always be operating on the belt. Also, in order to increase the fiction force between the belt and the tire, it might be better to use a rubber material for the belt.

As in a buckle, the fixing anchor is usually installed on the fixing side. This is usually the floor of the pallet, or on the wheel-side supporting apparatus. The fixing tool, such as the buckle is for attaching the belt and locking the belt, functions a similar way. The basic structure for the buckle is the seat belt buckle, which has a significant reputation for holding the passenger in an automobile, as a fixed attachment. The anchor is used when the stopper for the belt is hooked in place. Thus, the anchor has the basic structure to clamp the hook. Also, these buckles and anchors would be installed under the floor as to not protrude from the floor. In this way, the floor is flat for unobstructed transference of the vehicle.

For a buckle which is to fix a belt, usually a locking system is applied. The locking system is basically the same as the seat belt locking system. When the end of the belt is put into the buckle, the lock is automatically set. Also, the releasing mechanism of the lock is installed on the buckle side. A button is usually installed when considering that the buckle and the anchor are installed in the pallet floor. This is for adjustment or release from the lock.

The retractor is the apparatus for rolling the belt back into the place. It is installed in the pallet floor. The belt is rolled by the retractor's spiral shaped spring, and pulled tight to be free of the looseness of the belt. When the belt is pulled out from the retractor, the retractor's locking system is released prior to that. After the belt is pulled out to the right position, the retractor automatically rolls back the belt to be free of the looseness in the belt. As a result, the belt becomes taught. As this case with a seat belt, once the length of belt is released from the retractor, that length is fixed. This is for safety reasons. If the belt were not a fixed length, it would be unnecessary. Anyhow, after the belt is set to the right position, the belt will not be loosened and tightened. After being locked by the retractor's locking system, the belt will not be pulled out further. Therefore, the wheel is fixed securely.

By rolling the belt over the wheel (upper portion of the wheel), the wheel is pushed down to the floor. The vehicle is fixed on the pallet securely. Even if the pallet moves abruptly and generates a great amount of velocity or acceleration, the vehicle's wheels are fixed firmly to prevent any deviation of vehicle from the pallet.

According to this invention and method, a much higher security and stability of the fixing are able to obtain. In this invention, it is better for all of the wheels to be fixed to the system. However, it may be enough that only two or three of the wheels be fixed to the floor. Fixing four to the floor provides just that much more security.

The major function of the belt is to tighten the wheel and to push down the wheel to the floor. Thus, what must be considered is the prevention of sliding of the wheel. In order to prevent this sliding, all or part of the belt material is made from a flexible or spring like material. The belt will not loosen. This method is very effective. Also, skid proof materials can be applied to the belt.

Also, it will be better that the belt is made like a net or a harness to hold or surround the top portion of the wheel so it will not slide off the wheel. Also, the belt is separated into a main belt which pushes the wheel to the floor, and a side belt which holds the wheel from the side. This is a better system. Furthermore, a tube structure is attached to the belt, the tube is injected with compressed gas (air) and inflated. The inflated tube holds the side of the wheel more firmly. This prevents the belt's sliding off the wheel.

While the wheel-side supporting apparatus is not in use, the apparatus is positioned inside the pallet. However, when the wheel-side supporting apparatus is in use, one end is extracted from the inside of the floor. This arm becomes a support of the wheel-side supporting apparatus. With this apparatus functioning the wheel cannot move laterally. Also when the wheel-side supporting apparatus is designed to surround the wheel from above, it is much more secure, restricting all side-ways sliding. When the air bag is installed on the wheel-side supporting apparatus, after inflating the bag, the gap between the wheel and the wheel-side supporting apparatus is removed. As the wheel and the wheel-side supporting apparatus are in direct contact, this provides for better holding of the wheel.

Because there is a difference in vehicles regarding the wheel position, this invention adjusts to those differences. Determining wheel position is not difficult when using photo-sensors, image treatment scanners and closing sensors. This apparatus can easily adjust to the position of the wheel. The automatic arm takes the tongue plate by clamping it, then it pulls the belt out from the retractor, and puts it into the lock to fix the wheel, all the while this being monitored. If the retractor is attached on the wheel-side supporting apparatus, the fixation is performed as described above. As it is described above, the whole operation in which each wheel is fixed onto the pallet can be fully automated.

When the vehicle is put on the pallet at the mode-interchange, according to this invention, this whole process can be fully automated. The plurality of the outstanding fixation apparatuses (usually four units) are installed along the line of the guideway of the pallet. In this mode-interchange (toll gate), the vehicle mounts the pallet without any operation. Prior to this, the pallet is set on the guideway by the actuator, an oil pressure jack, etc. The surface of the road leading to the pallet is flat and level as to provide no hindrance or obstruction when the vehicle mounts the pallet.

The following are the brief explanations of the figures.

Fig. 1 shows a side view of the wheel fixing apparatus.

Fig.2 is a plane which shows the upper view of the wheel fixing apparatus.

Fig 3 is a plane which shows the upper view of the wheel fixing apparatus.

Fig.4 shows a side view of the wheel fixing apparatus.

Fig.5 is a plane which shows the upper view of the wheel fixing apparatus.

Fig.6 shows a side view of the wheel fixing apparatus.

Fig.7 shows a side view of the wheel fixing apparatus.

Fig 8 shows a side view of the wheel fixing apparatus.

Fig.9 shows a side view of the wheel fixing apparatus.

Fig.10 shows a side view of the wheel fixing apparatus.

Fig. 11 shows a side view of the wheel fixing apparatus.

Fig 12 shows a birds eye view of the wheel fixing apparatus.

Fig. 13 shows a side view of the wheel fixing apparatus which is attached to the position adjustment apparatus.

Fig.14 shows a side view of the wheel fixing apparatus which is attached to the position adjustment apparatus.

Fig.15 shows a plane which shows the belt and tongue plate (stopper).

Fig. 16 shows a plane which shows the belt and tongue plate (stopper).

Fig 17 shows a bird's eye view of the pallet.

Fig. 18 is a block diagram which shows a procedure of the fixing operation.

Fig. 19 is a bird*'*s eye view which shows a method of fixation by the fully automated wheel fixing apparatus.

Fig. 20 is a bird*'*s eye view which shows a method of fixation by the fully automated wheel fixing apparatus.

Fig. 21 is a bird*'*s eye view which shows a method of fixation by the fully automated wheel fixing apparatus.

Fig. 22 is a bird's eye view which shows a method of fixation by the fully automated wheel fixing apparatus.

Fig. 23 is a bird*'*s eye view which shows a method of fixation by the fully automated wheel fixing apparatus.

Fig. 24 is a bird's eye view which shows a method of fixation by the fully automated wheel fixing apparatus.

Fig.25 is a bird*'*s eye view of the mode-interchange.

### The best expression of the invention

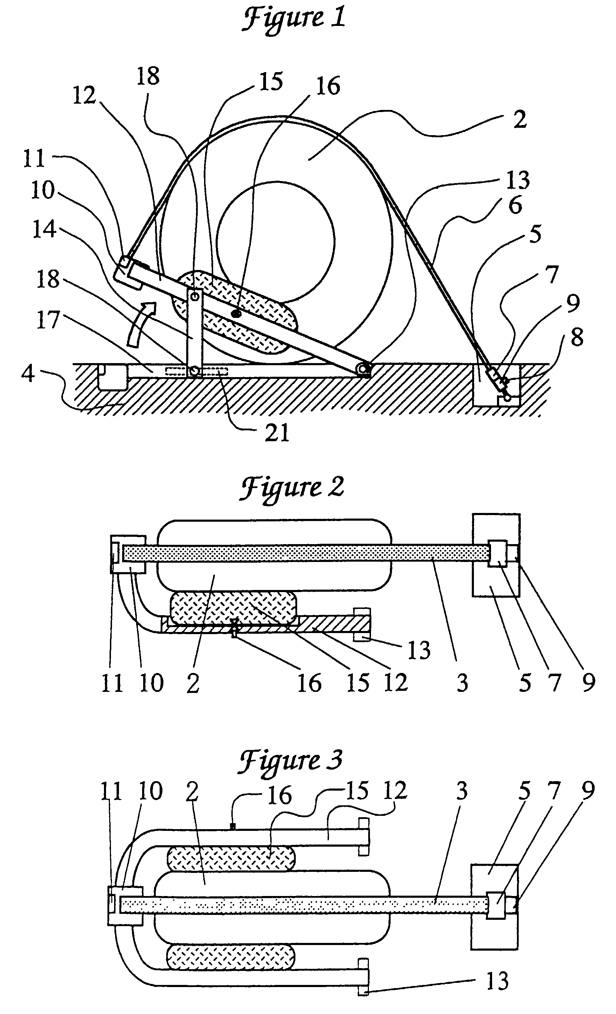

Fig. 1 shows the front view adjacent the tire (wheel) 2.

The wheel 2 of the automobile is riding on the fixing floor 4 for the tire (wheel). The fixing floor 4 for the tire (wheel) is such a floor of the pallet or ship, freight car and so on to fix the wheel. The wheel-side supporting apparatus 12 is installed in the box 17 for furnishing the wheel-side supporting apparatus. One end of the wheel-side supporting apparatus 12 is fixed and connected to the fixing floor 4 for the tire (wheel) by the hinge 13. The wheel-side supporting apparatus 12 is attached with the air bag 15, and the injection inlet 16 is installed on the wheel-side supporting apparatus 12 to inject the gases (air). In this figure, the air bag 15 is inflated by injected gases (air), however, when the wheel-side supporting apparatus 12 is put into the fixing floor 4 for the tire (wheel), the air bag is put into the side of the wheel-side supporting apparatus 12. The retractor 10 is installed on the one side of the end, also the lock system 11 is attached. The lock system 11 is to lock the movement of the belt 6 which is pulled out of the retractor 10. Once the wheel fixing is done, the lock system will not allow the belt to be pulled out more. The belt 6 is pulled out from the retractor 10, the belt 6 is then rolling over the tire (wheel) 2. The tongue plate (stopper) 7 is installed on one end of the belt 6, however in this figure, the tongue plate (stopper) 7 is already put into the buckle 9 (anchor), and is locked. The belt 6 is rolling over the half upper portion of the tire (wheel) 2, pushing down the tire (wheel) 2. Also, the tongue plate (stopper) 7, which is set on the end of the belt 6, is fixed to the buckle (anchor) 9 which is placed at the hole 5 in the fixing floor 4. Releasing switch 8 is installed on the buckle (anchor) 9, this switch is used when the tongue plate (stopper) 7 needs to be released from the buckle (anchor) 9. The wheel-side supporting apparatus 12 pops up to prevent the lateral sliding of the tire (wheel) 2. The reinforcement member 14 reinforces stiffness of the wheel-side supporting apparatus 12, and together with the wheel-side supporting apparatus 12, prevents the lateral sliding of the tire (wheel) 2. Generally, automobiles have four tires (wheels) 2 each, therefore, when each tire (wheel) is stabilized by a wheel-side supporting apparatus, the tire (wheel) 2 is prevented from sliding on both the right and left side. The reinforcement hinge 18 is installed on the reinforcement member 14. One of the hinges on the reinforcement hinge 18 is movable within the sliding ditch 21. While the wheel-side supporting apparatus 12 is not in use, it is set in the floor 4. When the wheel-side supporting apparatus 12 is needed, one end is lifted and the attached belt 6 is pulled out from the retractor 10. The wheel-side supporting apparatus 12, buckle (anchor) 9 and all of the equipment is placed in the floor 4. Thus, the floor 4 becomes totally flat when the tire (wheel) 2 is riding on.

Fig. 2 shows the upper view of the tire (wheel) 2 fixing apparatus.

The wheel-side supporting apparatus 12 is installed on the floor 4 and connected to the pallet 3 by the hinge 13. The wheel-side supporting apparatus is an "L"-shaped bar that is installed beside the tire (wheel) 2 to prevent the movement of the tire (wheel) 2 in both the lateral and longitudinal directions. The belt 6 is pulled out from the retractor 10. The tongue plate (stopper) 7, which is attached on the end of the belt 6, is fixed to the buckle (anchor) 9. The buckle (anchor) 9 is installed in the internal box 5. The air bag 15 is installed on the side of the wheel-side supporting apparatus 12, and is inflated between the wheel-side supporting apparatus and the tire (wheel) 2. This fixes the tire (wheel) 2 more firmly by pushing it from the side with the air pressure in the air bag 15. Also, the air inlet 16 is installed on the side of the wheel-side supporting apparatus to inject the compressed air into the air bag 15.

Fig. 3 shows the upper view of the tire (wheel) 2 fixing apparatus.

The wheel-side supporting apparatus 12 is connected to the pallet 3 by the hinge 13, and is installed so as to surround the tire (wheel) 2. The wheel-side supporting apparatus 12 is a 'U"-shaped bar, and is installed beside the tire (wheel) 2 to prevent the movement of the tire (wheel) 2 both laterally and longitudinally. The belt 6 is pulled out from the retractor 10. The tongue plate (stopper) 7, which is attached on the end of the belt 6, is fixed to the buckle (anchor) 9. The buckle (anchor) 9 is installed in the internal box 5. The air bag 15 is installed on the side of the wheel-side supporting apparatus 12, and is inflated between the wheel-side supporting apparatus and the tire (wheel) 2. This fixes the tire (wheel) 2 more firmly by pushing from the side with the air pressure in the air bag 15. Also, the air inlet 16 is installed on the side of the wheel-side supporting apparatus to inject the compressed air into the air bag 15.

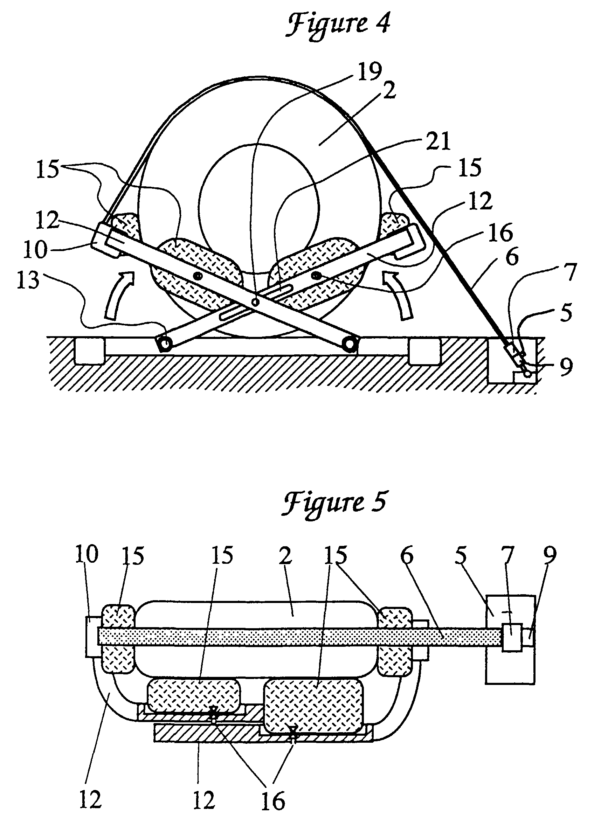

Fig. 4 shows the side view of the tire (wheel) 2 fixing apparatus.

Two of the wheel-side supporting apparatuses 12 are installed as they clamp the tire (wheel) 2. Each wheel-side supporting apparatus 12 is able to open and close at the point on the hinge as a fulcrum. Each wheel-side supporting apparatus 12 is an "L"-shaped bar and is installed beside the tire (wheel) 2 to prevent the movement of the tire both laterally and longitudinally. Each wheel-side supporting apparatus is connected to the movable hinge, and the hinge is able slide within the sliding ditch 21. The belt 6 is pulled out from the retractor 10. The tongue plate (stopper) 7, which is attached on the end of the belt 6, is fixed to the buckle (anchor) 9 which is installed in the internal box in the floor 4. The buckle (anchor) 9 is installed in the inside box 5. Four of the air bags 15 are installed on the inside of the wheel-side supporting apparatus 12, two of those are installed on the side of the wheel-side supporting apparatus and at the end of the retractor 10. They inflate between the wheel-side supporting apparatus and the tire (wheel) 2. They fix the tire (wheel) 2 more firmly by pushing it from the side with the air pressure in the air bag 15. Also, the air inlet 16 is installed on the side of the wheel-side supporting apparatus to inject the compressed air into the air bag 15. In this case, the tire wheel) 2 is firmly fixed on the floor 4 of the pallet by the wheel-side supporting apparatus 12 and the belt 6 as they clamp the tire (wheel) 2.

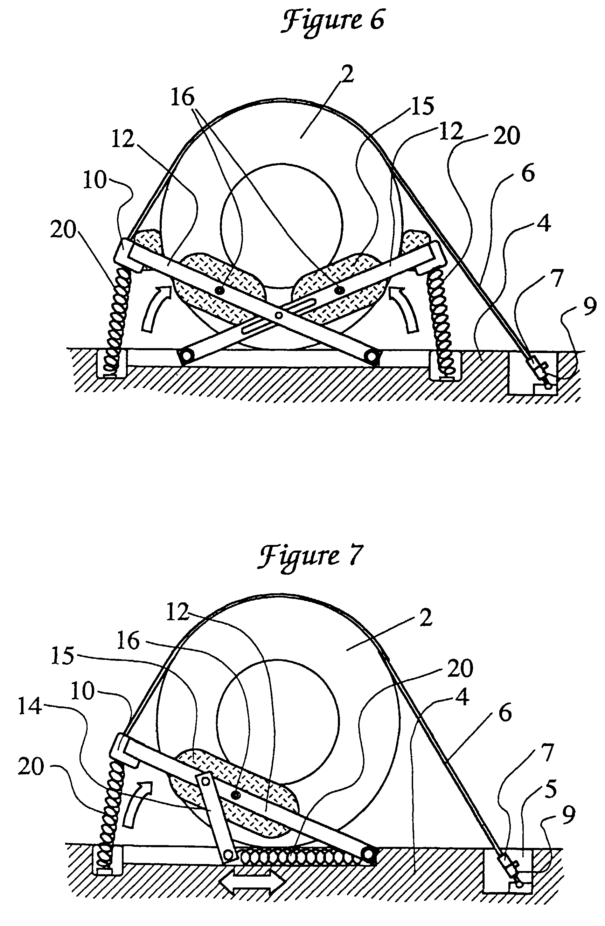

Fig. 5 shows the upper view of the tire (wheel) 2 which is fixed on the floor by the wheel fixing apparatus.

Two of the wheel-side supporting apparatuses 12 are installed with the horizontal bars positioned in front and behind the tire (wheel) 2. Each wheel-side supporting apparatus 12 is able to open and close at the point on the hinge as a fulcrum. Each wheel-side supporting apparatus 12 is an "L"-shaped bar, and is installed on the same side of the tire (wheel) 2 to prevent the movement of the tire (wheel) 2 both laterally and longitudinally. The belt 6 is pulled out from the retractor 10. The tongue plate (stopper) 7, which is attached on the end of the belt 6, is fixed to the buckle (anchor) 9 which is installed in the internal box in the floor 4. The buckle (anchor) 9 is installed in the internal box 5. Four of the air bags 15 are installed on the inside of the wheel-side supporting apparatus 12. Two of those are installed on the side of the wheel-side supporting apparatus 12 and at the end of the retractor 10. They are inflated between the wheel-side supporting apparatus 12 and the tire (wheel) 2. They fix the tire more firmly by pushing from the side with the air pressure in the air bag 15. Also, the air inlet 16 is installed on the side of the wheel-side supporting apparatus 12 to inject the compressed air into the air bag 15. In this case, the tire (wheel) 2 is firmly fixed on the floor 4 of the pallet by two of the wheel-side supporting apparatuses 12 and the belt 6 as they clamp the tire (wheel) 2.

Fig. 6 shows the side view of the tire (wheel) 2 fixing apparatus.

Two of the wheel-side supporting apparatuses 12 are installed with the horizontal bars positioned in front and behind the tire (wheel) 2. Each wheel-side supporting apparatus 12 is able to open and close at the point on the hinge as a fulcrum. Each wheel-side supporting apparatus 12 is an "L"-shaped bar and is installed on the same side of the tire (wheel) 2 to prevent the movement of the tire both laterally and longitudinally. Each wheel-side supporting apparatus has a retractor. The belt 6 is pulled out from the retractor 10. The tongue plate (stopper) 7, which is attached on the end of the belt 6, is fixed to the buckle (anchor) 9 which is installed in the internal box in the floor 4. Each wheel-side supporting apparatus 12 has a spring 20 which pulls back the wheel-side supporting apparatus 12 into the floor. The buckle 9 is installed in the internal box 5. Four of the air bags 15 are installed on the inside of the wheel-side supporting apparatus 12. Two of those are installed on the side of the wheel-side supporting apparatus at the end of the retractor 10, and are inflated between the wheel-side supporting apparatus and the tire (wheel) 2. They fix the tire (wheel) 2 more firmly by pushing it from the side with the air pressure in the air bag 15. Also, the air inlet 16 is installed on the side of the wheel-side supporting apparatus 12 to inject the compressed air into the air bag 15. In this case, the tire (wheel) 2 is firmly fixed on the floor 4 of the pallet by two of the wheel-side supporting apparatuses 12 and the belt 6 as they clamp the tire (wheel) 2.

Fig. 7 shows the side view of the wheel fixing apparatus which fixes the tire (wheel) 2.

A wheel-side supporting apparatus 12 is installed on the side of the tire (wheel) 2. The wheel-side supporting apparatus 12 is able to open and close at the point on the hinge as a fulcrum. The wheel-side supporting apparatus 12 is an "L" shaped bar, and installed on the side of the tire (wheel) 2 to prevent the movement of the tire both laterally and longitudinally. The belt 6 is pulled out from the retractor 10, the tongue plate (stopper) 7, which is attached on the end of the belt 6, is fixed to the buckle (anchor) 9 which is installed in the internal box in the floor 4. The buckle (anchor) 9 is installed in the inside box 5. The air bags 15 are installed on the inside of the wheel-side supporting apparatus 12. One of these is installed on the side of the wheel-side supporting apparatus 12 at the end of the retractor 10 and is inflated between the wheel-side supporting apparatus 12 and the tire (wheel) 2. This fixes the tire (wheel) 2 more firmly by pushing it from the side with the air pressure in the air bag 15. The air inlet 16 is installed on the side of the wheel-side supporting apparatus to inject the compressed air into the air bag 15. Also, the wheel-side supporting apparatus and reinforcement member 14 have a pull back spring 20 which functions when the wheel-side supporting apparatus must be set in the floor.

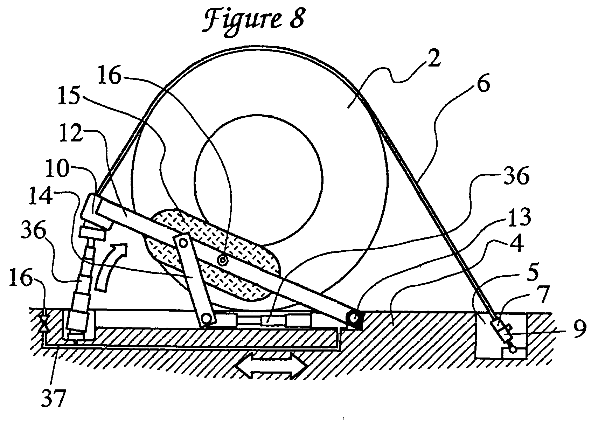

Fig. 8 shows the side view of the wheel fixing apparatus which fixes the tire (wheel) 2.

A wheel-side supporting apparatus 12 is installed on the side of the tire (wheel) 2. The wheel-side supporting apparatus 12 is able to open and close at the point on the hinge as a fulcrum. The wheel-side supporting apparatus 12 is an "L"-shaped bar, and installed on the side of the tire (wheel) 2 to prevent the movement of the tire (wheel) 2 both laterally and longitudinally. The wheel-side supporting apparatus has an elastic cylinder 36. The elastic cylinder 36 pushes up the wheel-side supporting apparatus 12 as the hinge 13 is a fulcrum using the compressed air. The compressed air is transferred to the elastic cylinder 36 for the reinforcement member 14 through the air inlet 16 and the air pipe 37. The belt 6 is pulled out from the retractor 10. The tongue plate (stopper) 7, which is attached on the end of the belt 6, is fixed to the buckle (anchor) 9 which is installed in the inside box in the floor 4. The buckle (anchor) 9 is installed in the internal box 5. The air bags 15 are installed on the inside of the wheel-side supporting apparatus 12. One of these is installed on the side of the wheel-side supporting apparatus 12 at the end of the retractor 10 and is inflated between the wheel-side supporting apparatus 12 and the tire (wheel) 2. This fixes the tire (wheel) 2 more firmly by pushing it from the side with the air pressure in the air bag 15. The air inlet 16 is installed on the side of the wheel-side supporting apparatus to inject the compressed air into the air bag 15. In this case, the wheel fixing apparatus fixes firmly to the vehicle's wheel-side of the floor 4 by two of the wheel-side supporting apparatuses 12 and the belt 6, with pushing down the tire (wheel) 2.

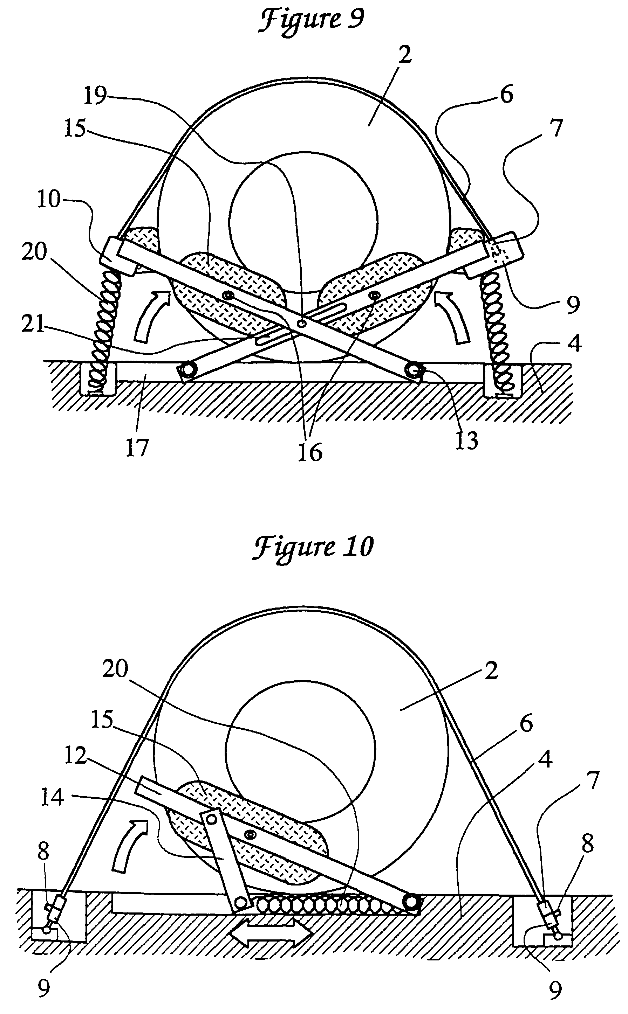

Fig. 9 shows the side view of the wheel fixing apparatus which fixes the tire (wheel) 2.

Two of the wheel-side supporting apparatuses 12 are installed with their horizontal bars positioned in front of and behind the tire (wheel) 2. These clamp onto the tire (wheel) 2. Each wheel-side supporting apparatus 12 is an 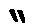 L*"*-shaped bar, and installed on the same side of the tire (wheel) 2 to prevent the movement of the tire both laterally and longitudinally. One of the wheel-side supporting apparatuses has a retractor 10 on the end of the bar, and the other one has a buckle (anchor) 9 on the end of the bar. The belt 6 is pulled out from the retractor 10 which is installed on one of the wheel-side supporting apparatuses 12. The tongue plate (stopper) 7, which is attached on the end of the belt 6, is fixed to the buckle (anchor) 9 which is installed on the end of the other wheel-side supporting apparatus. Each wheel-side supporting apparatus 12 is connected to the floor 4 by the sliding hinge 13. Each wheel-side supporting apparatus 12 is able to open and close at the point on the hinge 19 as a fulcrum. When the wheel-side supporting apparatuses 12 are needed to be set in the floor 4, the wheel-side supporting apparatuses 12 are pushed down to the settling ditch 17. The buckle 9 is installed in the internal box 5. Each wheel-side supporting apparatus 12 has a pulling back spring 20 to set the wheel-side supporting apparatus in the settling ditch 17. Four of the air bags 15 are installed on the inside of the wheel-side supporting apparatus 12, two of those are installed on the side of the wheel-side supporting apparatus at the end of the retractor 10. They are inflated between the wheel-side supporting apparatus and the tire (wheel) 2. They fix the tire (wheel) 2 more firmly by pushing from the side with the air pressure of the air bag 15. Also, the air inlet 16 is installed on the side of the wheel-side supporting apparatus 12 to inject the compressed air into the air bag 15. In this case, the tire (wheel) 2 is firmly fixed to the floor 4 of the pallet by two of the wheel-side supporting apparatuses 12 and the belt 6 as they clamp the tire (wheel) 2.

Fig. 10 shows the side view of the wheel fixing apparatus which fixes the tire (wheel) 2.

A wheel-side supporting apparatus 12 is installed on the side of the tire (wheel) 2. The wheel-side supporting apparatus 12 is able to open and close at the point on the hinge as a fulcrum. The wheel-side supporting apparatus 12 is an 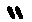 I*"* shaped bar, and installed on the side of the tire (wheel) 2 to prevent the movement of the tire laterally. The tongue plate (stopper) 7, which is attached on the end of the belt 6, is fixed to the buckle (anchor) 9, which is installed in the inside box 5 in the floor 4. The buckle (anchor) 9 is installed in the internal box 5 to provide a smooth surface on the floor 4. Also, the buckle (anchor) 9 has the releasing switch 8, to release the fixing of tongue plate (stopper) 7. The air bags 15 are installed on the inside of the wheel-side supporting apparatus 12. One of these is installed on the side of the wheel-side supporting apparatus 12 and is inflated between the wheel-side supporting apparatus 12 and the tire (wheel) 2. This fixes the tire (wheel) 2 more firmly by pushing from the side with the air pressure of the air bag 15. The reinforcement member 14 has the pulling back spring 20. The air inlet 16 is installed on the side of the wheel-side supporting apparatus to inject the compressed air into the air bag 15. In this case, after the end of the wheel-side supporting apparatus is raised up, the air bag 15 is inflated to fit the wheel-side supporting apparatus 12 to the tire (wheel) 2 closely. This maintains the position of the wheel-side supporting apparatus. The belt 6 rolls over the tire (wheel) 2 and is fixed by the buckles 9 (anchors) at both sides with the tongue plates (stoppers) 7.

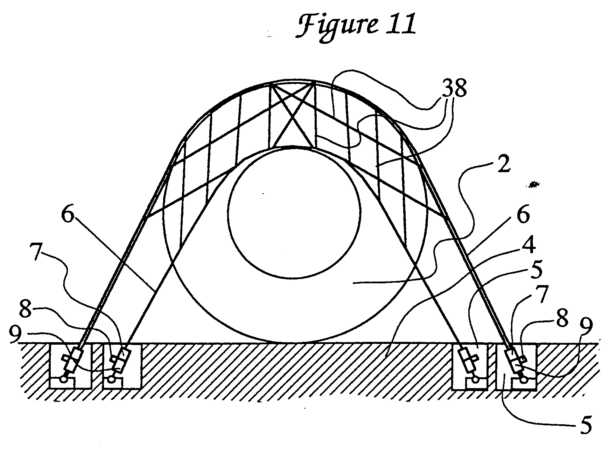

Fig. 11 shows the plane view in the case of wheel fixing which uses two sets of belts 6. Both ends have a tongue plates (stoppers) 7. A buckle (anchor) 9 for the tongue plate is installed.

There are two types of belt 6, one is the main belt which pushes down the tire (wheel) 2 to the floor, the other is the side belt which is connected to the main belt with harness 38. It prevents the main belt from slipping off the tire (wheel) 2. The harness 38 is installed to the belt 6. Both the tongue plates (stoppers) 7 are installed by connection to the buckle (anchor) 9 which is located in the floor 4. The buckle (anchor) 9 is installed internal box 5, and is made flat on the floor 4 to prevent contact when the tire (wheel) 2 runs on the floor 4. Also. the releasing switch 8 is installed on the buckle (anchor) 9 to unlock the tongue plate (stopper) 7.

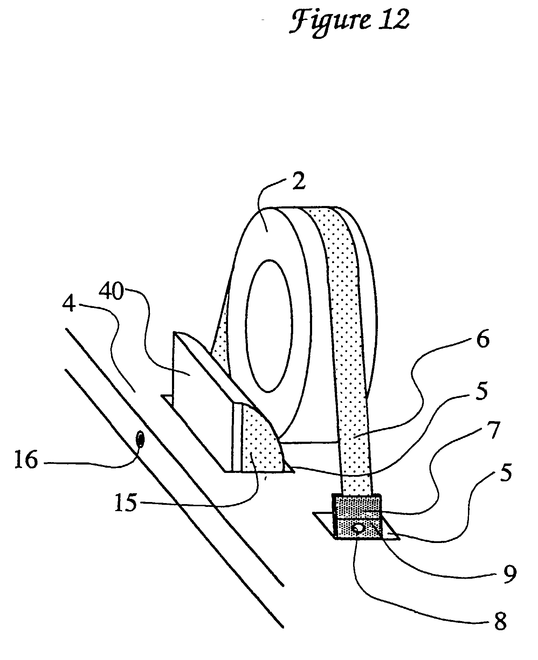

Fig. 12 shows the bird's eye view of the wheel fixing apparatus which fixes the tire (wheel) 2.

In this case, a pop-up wheel-side supporting apparatus 40 is installed on the floor at the side of the tire (wheel) 2. The pop-up wheel-side supporting apparatus protrudes at 90 degrees, perpendicular to the motion direction of the tire (wheel) 2. Using the air bag 15, this supports the side of the tire (wheel) 2. The pop-up wheel-side supporting apparatus 40 and the belt 6 are separately installed on the floor 4. The belt 6 is pulled out and rolled down the tire (wheel) 2, then the tongue plate (stopper) 7, which is attached on the end of the belt 6, is fixed to the buckle (anchor) 9 which is installed in internal box 5 in the floor 4. The buckle (anchor) 9 has the releasing switch 8, this releases the tongue plate (stopper) 7. The air inlet 16 is installed on the side of the floor 4 to which the tire (wheel) is fixed, to inject the compressed air into the air bag 15.

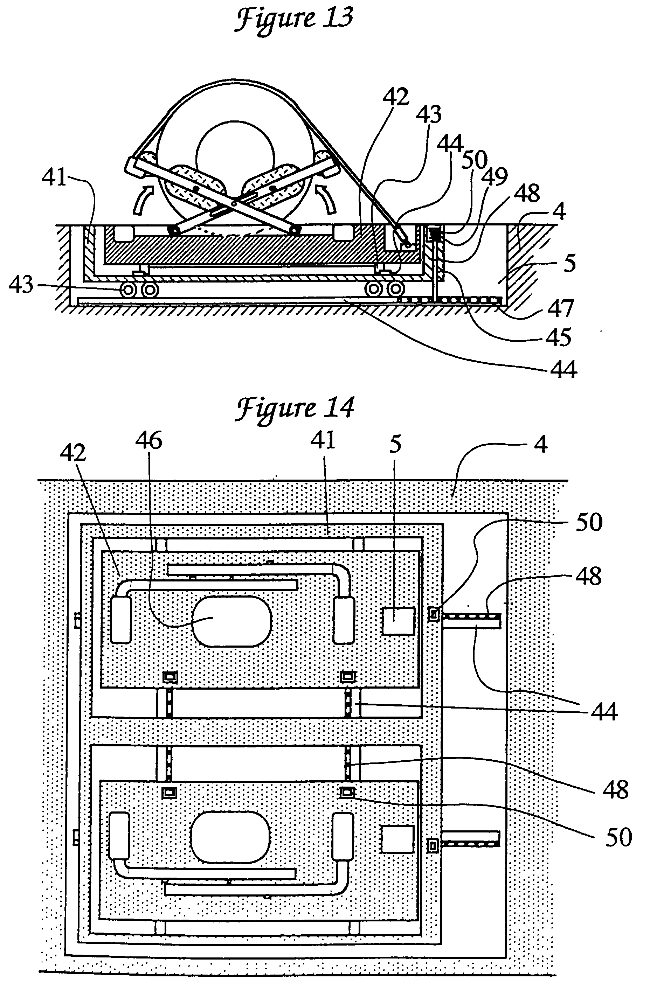

Fig. 13 shows the side cross section of the wheel fixing apparatus which has the ability to adjust the position of the apparatus.

In the floor 4 for fixing the tire (wheel), a box 5 is installed. In the box 5, the adjusting rail 44 for longitudinal direction and the lock hole 47 for the rail are installed. The wheels 43 for longitudinal adjusting run on the adjusting rail 44 and support the wheel base adjusting board 41. In the wheel base adjusting system, other wheels 43 for longitudinal adjusting are installed and run on the adjusting rail 44. Also, the lock hole 45 for locking the rail lock stick 48 is installed in the wheel base adjusting board 41 which supports the adjusting boards 42 which adjust the inter wheel distance. The wheel fixing apparatus is installed in the board 42 in between the tires 2. On the longitudinal adjusting rail 44, the lock hole 47 for the rail is installed. The rail lock stick 48 is fitted into the hole. When the wheel base plate 41 is positioned adequately, the rail lock stopper 50 is raised, then the rail lock stick 48 is put down to lock it by the spring 49 which is installed to the stick 48. In this case, the positioning is performed by the method of the rail lock system. However, this is not the only method for positioning, there are some other systems such as using the ball screw method.

Fig. 14 shows the upper view of the wheel fixing apparatus which has a wheel positioning ability.

In the floor 4 for fixing the tire (wheel), a box 5 is installed. In the box 5, adjusting rail 44 for longitudinal direction and lock hole 47 for rail are installed. The wheels 43 for longitudinal adjusting run on the adjusting rail 44 and support the wheel base adjusting board 41. On the wheel base adjusting board 41, the rail lock stick 48 is installed in the hole 45, and this sustains the boards 42. The boards 42 maintain the distance between the both right and left side of the wheel. In the board 42, the wheel fixing apparatus is installed. On the length adjusting rail 44, the rail lock ditch 47 is installed. In the ditch the rail lock stick 48 is designed to fit into it. When the position of the wheel base adjusting board 41 is set in adequately, the rail lock stopper 50 is raised, then the rail lock stick 48 is put down to lock it with the spring 49 which is installed with the stick 49. In this case, the positioning is performed by the method of rail lock system. However, this is not the only method to do positioning, there are some other systems such as using the ball screw method.

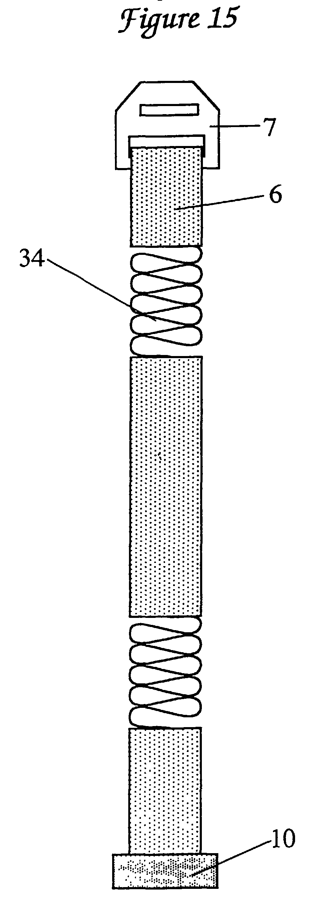

Fig. 15 shows the plane view of the belt 6 and tongue plate (stopper) 7.

The tongue plate (stopper) 7 is placed at the end of the belt 6. It is similar to the seat belt for passengers of an automobile and it is paired with the buckle. In this case, the belt 6 is pulled out from the retractor 10. Its material is made from the same fiber as the seat belt is. The tongue plate (stopper) 7 has a hole for locking. Also, there are the spring sections 34 in the belt 6. It provides more tension for the belt itself to fix to the wheel more firmly.

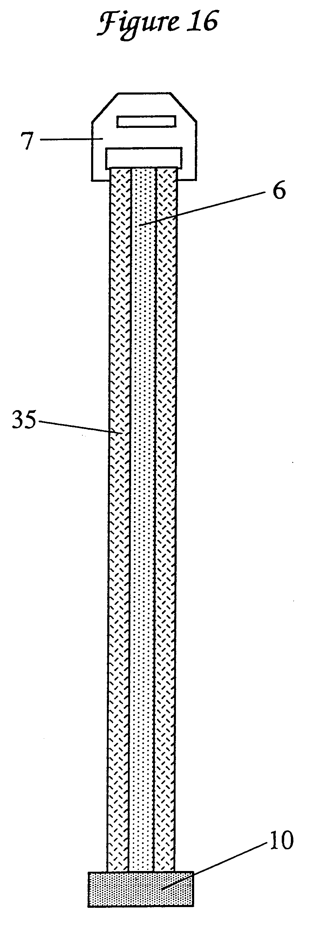

Fig. 16 shows the plane view of the belt 6 and tongue plate (stopper) 7.

The tongue plate (stopper) 7 is placed at the end of the belt 6. It is similar to the seat belt for passengers of an automobile and it is paired with the buckle. In this case, the belt 6 is pulled out from the retractor, and its material is made from the same fiber as the seat belt. The tongue plate has a hole for locking. Also, there is a tube portion 35 in the belt. The compressed air is injected into the tube to be inflated to prevent the belt 6 slipping off the tire (wheel).

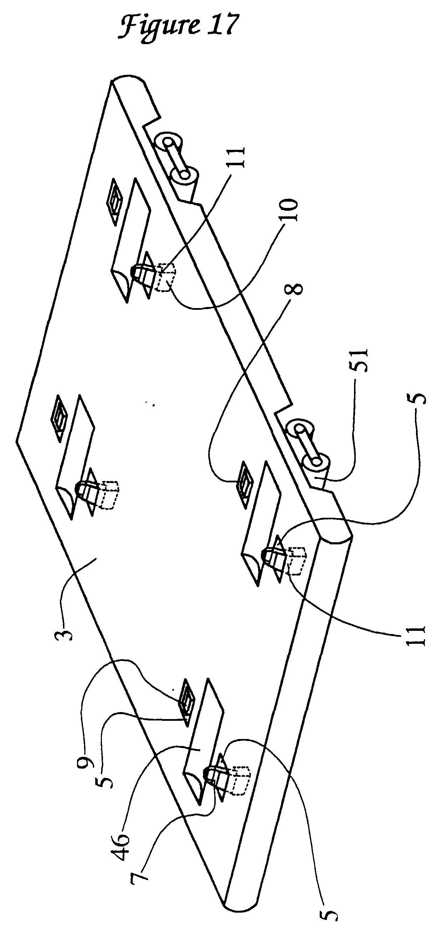

Fig. 17 shows the bird's eye view of the pallet 3.

The pallet 3 has four wheel fixing apparatuses, each having a pair of retractors 10 and the buckle (anchor) 9. These wheel fixing apparatuses are installed at the tire (wheel). The retractor 10 and buckle (anchor) 9 are installed in the boxes 5 which are set in the floor 4 to be flat to not obstruct the rolling wheel. The tongue plate (stopper) 7 is placed at the end of the belt 6. Each buckle (anchor) 9 has a releasing switch 8 to unlock the belt 6. Each retractor 10 has a locking system 11 to lock it automatically. In this case, the pallet carries passenger cars. However, to match the different types of automobiles, retractor 10, buckle (anchor) 9, and hole box 5 can be positioned into the right places. At the place the tire (wheel) is fixed, indented section 46 is installed to prevent the tire*'*s (wheel's) side-ways slipping movement. On the pallet 3, the surface wheels 51 of the pallet are installed.

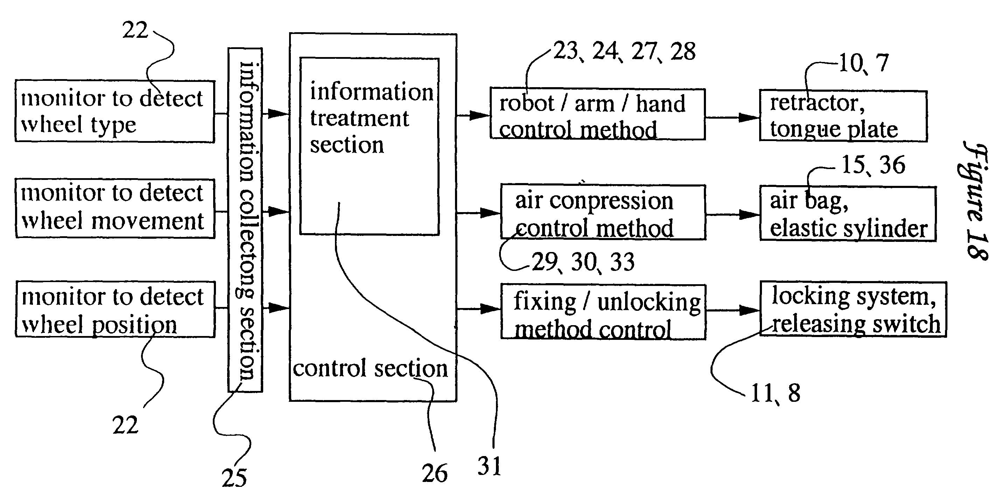

Fig. 18 shows the block diagram of the method of the wheel fixing by the automated apparatus.

When the automobile arrives on the pallet, the type of automobile, the position and the conditions for carrying the automobile on the pallet are detected by the monitor 22. This information is sent to the collection section 25. Then, it is treated and calculated by the information treating section 31. Based on the results of the treatment and calculation, the arm 23 of the robot is controlled and grasps the tongue plate (stopper) 7, which is placed on the end of the belt 6 by control of the control module 26. The position of the grasped tongue plate (stopper) 7 is re-monitored by the monitor 22. Then, the information from the monitor 22 feeds back to the control module 26. Then, the arm 23 and the hand 24 of the robot are controlled and manipulated. The arm 23 and hand 24 of the robot form a grasping section 27 and pulling section 28. While regulating the compressed air, the air from the compressed air tank 30, this injects the air to the air bag 15 using the injecting arm 33. The injecting arm 33 forms injection section 29. The locking system 11, which is installed within retractor 10, controls and regulates the releasing switch 8 being fixed to lock or unlock the belt.

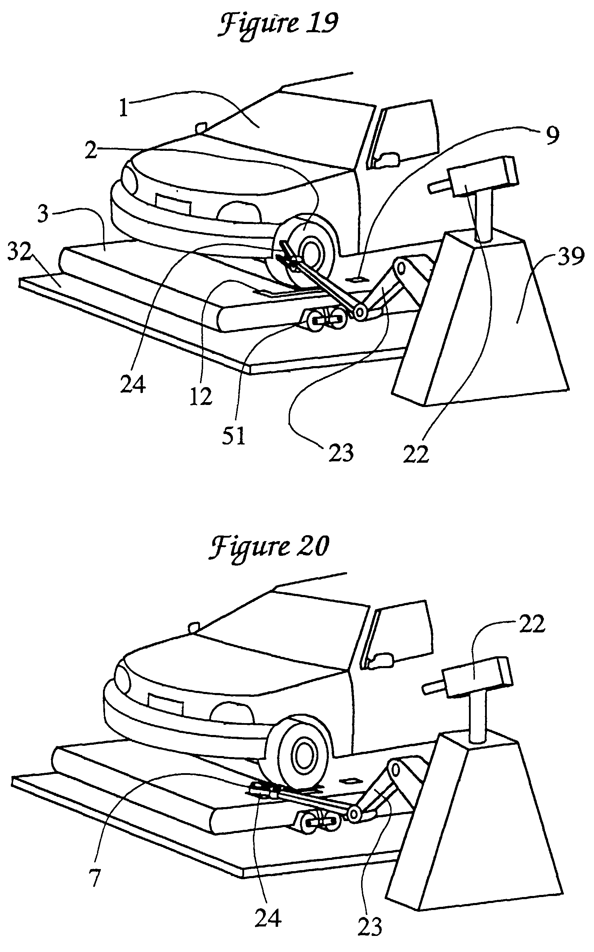

Fig. 19 to 24 shows the sequential figures of the fixing of the tire (wheel) 2 by the automated apparatus 39 on the pallet 3.

Fig. 19 shows that the pallet 3 carries the automobile (passenger car) 1.

The pallet 3 is riding on the pallet supporting board 32. The pallet supporting board 32 is movable by a jack system to adjust the level of the pallet 3. The wheel-side supporting apparatus 12 and the pallet wheel 51 are installed on the pallet 3. The monitor 22 which is placed on the automated wheel fixing apparatus 39 is for detecting the automobile 1 position, position of the tire (wheel) 2, arm 23 of the robot, and the hand 24 of the robot. The wheel fixing apparatus 39 contains the arm 23 of the robot and the hand 24 of the robot.

Fig. 20 shows that the tongue plate (stopper) 7 is grasped by the arm 23 of robot and pulled out by the hand 24 of robot from the retractor 10 which is located on the end of the wheel-side supporting apparatus 12. The whole process is monitored by the monitor 22.

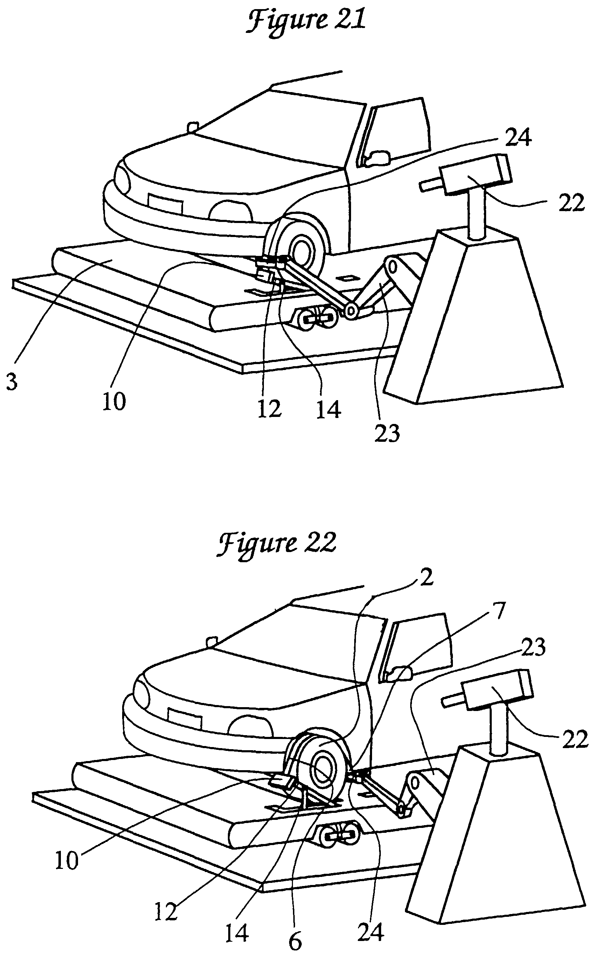

Fig. 21 shows that the tongue plate (stopper) 7 is pulled out by the arm 23 and the hand 24 of the robot from the retractor 10, which is located on the end of the wheel-side supporting apparatus 12. Then the other side of the wheel-side supporting apparatus 12 is raised up from the floor of the pallet 3. As the side of the wheel-side supporting apparatus is raised, reinforcement 14 is also raised. The whole process is monitored by the monitor 22.

Fig. 22 shows that the belt 6 is rolled down over the tire (wheel) 2, as the tongue plate (stopper) 7 is grasped by the arm 23 of robot and pulled out by the hand 24 of robot from the retractor 10 which is located on the end of the wheel-side supporting apparatus 12. The wheel-side supporting apparatus 12 and the reinforcement 14 are raised completely to prevent the tire*'*s (wheel's) sideways slipping. The whole process is monitored by the monitor 22.

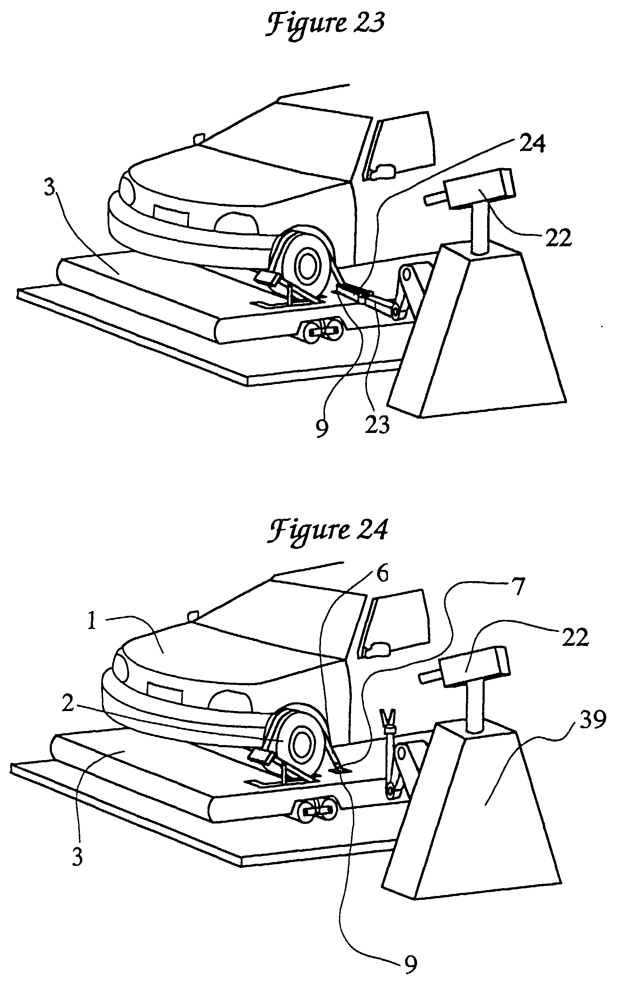

Fig. 23 shows that the tongue plate (stopper) 7 is attached to the buckle (anchor) 9 which is placed in the pallets, by the arm 23 of robot and hand 24 of robot to lock the tire (wheel). The whole process is monitored by the monitor 22.

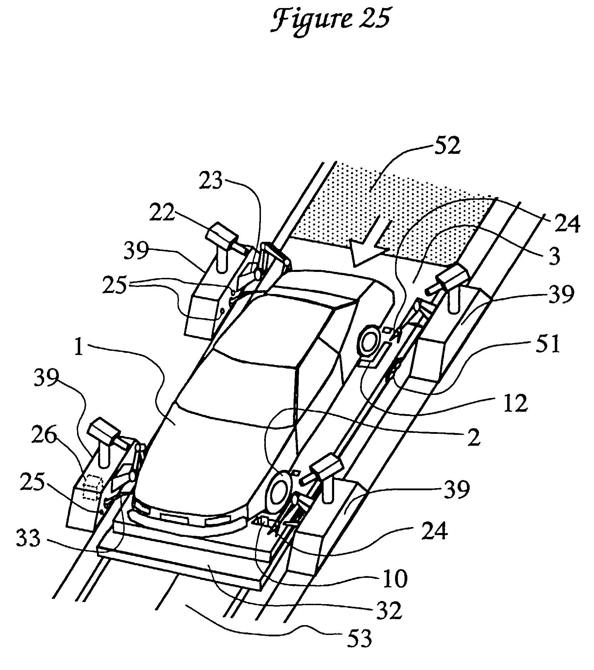

Fig. 24 shows that the wheel is fixed to the floor of the pallet by the wheel fixing apparatus 39.

The tire (wheel) 2 of the automobile 1 is pushed down to the floor by the belt 6, and the belt 6 is locked to the buckle (anchor) 9 through the tongue plate (stopper) 7. Thus, the automobile 1 is fixed on the pallet 3. The whole process is monitored by the monitor 22.

Fig. 25 shows the bird's eye view of the mode-interchange.

A car is the automobile, in this case, and four of the automated wheel fixing apparatuses 39 are set along the runway of the automobile. First of all, the car 1 is progressing into the guideway 53 from the road 52 as the indicated arrow sign, and enters the mode-interchange. The car 1 runs on the road 52 by itself, however, after being fixed on the pallet 3, the car 1 is mobilized by the pallet 3. The pallet 3 runs on the guideway 53. Thus, the car 1 moves automatically. Therefore, the mode is converted. Hence, the mode-interchange is the place to convert the mode of the movement. Preceding this the pallet 3 is positioned within an adequate area adjusted by the actuator or jack up system. The pallet 3 has four wheels 51 for the pallet. The level of the pallet 3 is adjusted to the same height (level) of the road for the automobile to mount the pallet 3 smoothly by using an oil jack-up system which is installed on the pallet support system 32. There is no gap between the road 52 and the floor 4 of the pallet 3. This adjusting work is performed at the place of support 32. Thus, the automobile can continue to ride on the pallet without doing anything. After the automobile is put on the pallet the arm 23 and the hand 24 of the robots which are installed at the four of the automated wheel fixing apparatuses 39, pull out the belt 6 which is placed in the retractor 10 of the wheel-side supporting apparatus 12. These fix automobile 1 to the pallet 3 automatically as described previously. In this case, the information collecting section 25 such as photo sensor and monitor 22 detects the position of the tire (wheel) 2. Then, the information is sent to the control module 26. Then, the control module 26 regulates the movement of the arm 23 and the hand 24 of the robot of the wheel fixing apparatus 39. Furthermore, the compressed air injection arm goes to the inlet for the air, then injects the air to inflate the air bag which is installed in the wheel-side supporting apparatus 12. This figure shows the system before operation. After the entire procedure is completed, the car 1 is fixed to the pallet 3, then the car 1 is moved on the guideway 53 with the pallet automatically.

### Industrial advantage

This invention, as described previously, is comprised of many industrial applications and advantages as follows.

Usually, the material of the belt is a stiff material such as in the seat belt of the automobile. If the same material is used, the usual seat belt has the ability to endure 3 tons per belt. Therefore, it is enough for fixing a car to the floor of the pallet. When all of the wheels are fixed, it has 12 tons of endurance to hold. Thus, even if the pallet moves and curbs quickly, it holds and fixes the car firmly enough. By using this invention apparatus, slipping, deviation from the set area, or destruction of the belt will not happen. Accordingly, when the pallet carrying car runs at high speeds with a large acceleration, the car is fixed on the floor of the pallet very firmly, safely and securely.

This invention fixes the wheel of an automobile. Usage of this invention is ubiquitous without requiring the owner of the vehicle to provide any supplementary equipment for their car. All the necessary equipment is provided by the pallet system itself. Due to this situation, the owner of any kind of automobile is not required to purchase anything to fix the automobile to the floor. The belt used in the invention is flexible. Its length can be adjusted freely, thus the adjustability of the belt is high. Even if the size or position is not standard, it can be fitted easily. In the range of passenger cars, their tread width and wheel base size is in a certain range. This makes it much easier to fix the wheel by using this invention. As the invention is comprised of the belt system which is described above, it is very adaptable for any type of wheel of any automobile.

Because the invention is comprised of a belt which pushes the wheel down, the wheel-side supporting apparatus supports the side of the wheel to prevent side-ways slipping. Fixing the vehicle becomes very secure. Therefore, the pallet, which carries the vehicle, can secure to itself any type of wheel of any automobile. The wheel fixed by the wheel fixing apparatus is mobilized at high speeds, the carried vehicle remains fixed firmly. Separation from the pallet will not happen. Through the reciprocal action force between the vehicle and the pallet is generated by the acting and anti-acting force, the pushed wheel operates to push together vehicle and pallet. However, when the acceleration force originates from an external force, such as a great acceleration or the braking force, the vehicle and the pallet move together without deviation.

Also, because of this invention, the vehicle is fixed to the pallet by fixing its wheels. Therefore, the suspension system, including springs, still functions perfectly. Therefore, the driver and passengers of the vehicle can be kept as comfortable as before they were carried on the pallet. The belt will not loosen because the belt is kept taut by the retractors' tension and flexible materials which are used for the belt. This guarantees the security of the fixing itself.

The slip-preventing material is used for the belt not to slip from the wheel. The wheel-side supporting apparatus can be used to prevent the lateral slipping of the wheel. The combination of these results in a higher level of security.

The structure of this invention is very simple, therefore, maintenance is less troublesome. The seat-belt for the passenger can be utilized for the belt. This results in a much lighter apparatus, and taking up less space. These factors contribute to lower energy costs for mobilizing the vehicle carrying pallet.

When the wheel fixing apparatus is not in use, the wheel fixing apparatus can be put into the pallet floor. This makes it possible for the floor to be totally flat. Since the floor can be made flat, the vehicle has no hindrance for mounting the pallet. It is a smooth operation.

According to the invention, in order to fix the vehicle on the pallet, the apparatus itself can be made very thin. Therefore, the pallet can be made very thin as well. The pallet doesn't require excess thickness. Therefore, when the transportation system is constructed, the pallet shape becomes thin and this will contribute to better energy performance for the operation of the transportation system and contribute to a lower system cost.

In a transportation system which employs this invention system (wheel fixing apparatus), the thickness of the pallet can be thin, therefore, the pallet stock warehouse can be very small. This contributes to less-construction costs for the warehouses. Therefore, the total cost of the transportation system can be reduced.

In the transportation system using the pallet carrying system, it is necessary to maneuver the empty pallet (not carrying the automobile) from point to point to accommodate the need for pallets for a certain other point. In such a condition, it is better that the pallet is thin, because it is possible that several pallets can be stacked. Therefore, the total cost for running the transportation system can be reduced.

Most vehicles have four wheels per vehicle. The wheel is exposed to the outside. In some cases, the rear-wheel is covered by the vehicle's body. Therefore, using this invention, the method or procedure of fixing is the same. This is completely different from the present technology, using a chain and hook. The chain and hook method requires manual procedure, it cannot be automated. On the other hand, this invention can be automated easily. Thus, the whole procedure can be fully automated. Because the invention has ubiquitousness and promptness, the procedure is performed not only manually, but also can be fully automated. This contributes to the fully automated and immediate procedure for loading and unloading the vehicle on the pallets floor, and fixing and unfixing its wheel to the floor. Especially for large vehicles, such as trucks, the fixing on the pallet's floor can be done. This makes the new transportation system which can transport all types of vehicles within the system.

Obviously, any part or all parts of the procedure of the operation of fixing can be done manually. However, the invention apparatus and procedure are employed for the transportation system. When utilizing the same kind of vehicle, some monitoring systems or positioning sensors can be used for the fixing process with these, the speed of fixing becomes faster.

Also, when the invention system is utilized in the transportation system, the capacity for fixing a large number of vehicle per hour becomes large. This is to absorb heavy traffic. Hence, in the mode-interchange, where vehicles enter and exit the system using this invention's apparatus, the automated fixing procedure for a large and small number of vehicles can be done. This is impossible with current methods and technology.

According to the invention, this is applied to every vehicle fixing field. Carrying vehicles using ships, sea containers or trucks is possible. In these cases, reduction of the operation load, automation and prompt transference occurs. However, this doesn't mean that the invention is limited within the limitation of these uses.

### 〈 Cited list 〉

- 1: automobile
- 2: tire(wheel)
- 3: pallet
- 4: floor
- 5: inside box
- 6: belt
- 7: tongue plate
- 8: releasing switch
- 9: buckle
- 10: retractor
- 11: locking system
- 12: wheel-side supporting apparatus
- 13: hinge
- 14: reinforcement member
- 15: air bag
- 16: injection inlet
- 17: settling ditch
- 18: reinforcement hinge
- 19: sliding hinge
- 20: pulling back spring
- 21: sliding ditch
- 22: monitor
- 23: arm of robot
- 24: hand of robot
- 25: information collecting section
- 26: control module
- 27: grasping section
- 28: pulling section
- 29: injection section
- 30: tank for compressed air
- 31: information treating section
- 32: supporting board
- 33: injection arm
- 34: spring section
- 35: tube section
- 36: elastic cylinder
- 37: air pipe
- 38: harness
- 39: automated apparatus
- 40: pop-up wheel-side supporting apparatus
- 41: wheel base adjusting board
- 42: adjusting board
- 43: wheel for longitudinal adjusting
- 44: adjusting rail
- 45: hole
- 46: dipping section
- 47: lock hole
- 48: rail lock hole
- 49: spring
- 50: rail lock stopper
- 51: wheel for the pallet
- 52: road
- 53: guideway

## Claims

1. A wheel fixing apparatus that is comprised of a belt that on one end of which has tongue plate, a retractor which connects to other end of said belt and has an ability to roll said belt and is installed on floor, and said retractor has an ability of locking/unlocking said tongue plate.

2. A wheel fixing apparatus that is comprised of a belt on both ends of which has tongue plate, a buckle which has an ability of locking/unlocking said tongue plate.

3. A wheel fixing apparatus that is comprised of a wheel-side supporting apparatus, one end of which is connected to the floor through a hinge and whole said apparatus is set in said floor, and supports the wheel from the lateral direction.

4. A wheel fixing apparatus that is comprised of a belt that on one end of which has tongue plate, and the other end of which is connected to a retractor which has the ability to roll said belt, a wheel-side supporting apparatus, one end of which is connected to the floor through a hinge and the other end has the retractor, and whole said apparatus is set in said floor, and supports the wheel from the lateral direction, a buckle which has an ability of locking/unlocking said tongue plate and is installed on one end of said belt.

5. A wheel fixing apparatus that is comprised of a belt that on one end of which has tongue plate, and the other end of which is connected to a retractor which has the ability to roll said belt, a wheel-side supporting apparatus, one end of which is connected to the floor by a hinge and the other end has the buckle which has the ability for locking/unlocking said tongue plate, and whole said apparatus is set in said floor and supports the wheel from the lateral direction, said retractor is installed in floor.

6. A wheel fixing apparatus that is comprised of a belt that on both ends of which have tongue plates, a wheel-side supporting apparatus, one end of which is connected to floor through a hinge and the other end has the buckle which has the ability for locking/unlocking said tongue plate, and whole said apparatus is settled in said floor, and supports the wheel from the lateral direction, a buckle which has the ability for locking/unlocking said tongue plate, and is installed in floor.

7. A wheel fixing apparatus that is comprised of a belt that on one end of which has tongue plate, and the other end of which is connected to a retractor which has the ability to roll said belt, a wheel-side supporting apparatus, one end of which is connected to the floor by a hinge and the other end has the retractor, and whole said apparatus is set in said floor, and supports the wheel from lateral direction, a wheel-side supporting apparatus, one end of which is connected to floor by a hinge and the other end has the buckle which has the ability for locking/unlocking said tongue plate, and whole said apparatus is settled in said floor, and supports the wheel from lateral direction.

8. A wheel fixing apparatus that is comprised of a belt on both end of which has tongue plate, a wheel-side supporting apparatus, one end of which is connected to the floor by a hinge and the other end has the buckle which has the ability for locking/unlocking said tongue plate, and whole said apparatus is settled in said floor, and supports the wheel from lateral direction.

9. A wheel fixing apparatus in claim 1 and 2, that has said wheel-side supporting apparatus in claim 3.

10. A wheel-side supporting apparatus, one of claim 3 through 8, that has an air bag which is installed on the side facing the wheel, or on the floor.

11. A wheel fixing apparatus in claim 1, 2, 4, 5, 6, 7 or 8, all or part of said belt is composed of a flexible material or spring.

12. A wheel fixing apparatus in claim 1, 2, 4, 5, 6, 7 or 8, all or part of said belt is composed of frictional material.

13. A wheel fixing apparatus in claim 1, 2, 4, 5, 6, 7 or 8, all or part of said belt is composed of a net structure.

14. A wheel fixing apparatus in claim 1, 2, 4, 5, 6, 7 or 8, said belt is composed of main belt and side belt, and said main and side belt are connected with a flexible material or net structure.

15. A wheel fixing apparatus in claim 1, 2, 4, 5, 6, 7 or 8, all or part of said belt is composed of tubular material.

16. A pallet/truck which has said wheel fixing apparatus in claim 1, 2, 3, 4, 5, 6, 7 or 8.

17. A process at least comprising the following procedure, in the method of using said apparatus which has said belt that on one end of which has tongue plate, and the other end of which is connected to said retractor in claim 1,
a. Pulling said belt from said retractor, which is installed in the floor,
b. Rolling said belt over the wheel by pulling said belt out from said retractor,
c. Fixing one end of said belt to the other side of the wheel by rolling said belt over the wheel.

18. A process at least comprising the following procedure, in the method of using said apparatus which has said belt that on both ends of which have tongue plates in claim 2,
a. Fixing said tongue plate which is installed on one end of said belt to the buckle which is installed in the floor,
b. Rolling said belt over the wheel by pulling said belt out from said retractor,
c. Fixing one end of said belt to the other side of the wheel by rolling said belt over the wheel.

19. A process at least comprising the following procedure, in the method of using said apparatus which has said belt that on one end of which has tongue plate, and the other end of which is connected to said retractor in claim 1, 4, 5, 7,
a. Raising up one end of said wheel-side supporting apparatus from the floor as the other end of wheel-side supporting apparatus is a fulcrum hinge,
b. Rolling said belt over the wheel by pulling said belt out from said retractor which is installed in the floor or on the wheel-side supporting apparatus,
c. Pulling and rolling the belt over the wheel as said tongue plate is leading said belt,
d. Fixing said tongue plate to the buckle which is installed in the floor, as said belt is being pulled out from said retractor, and rolling said belt over the wheel.

20. A process at least comprising the following procedure, in the method of using said apparatus which has said belt on both ends of which have tongue plates in claim 2, 6, 8,
a. Raising up one end of said wheel-side supporting apparatus from the floor as the other end of wheel-side supporting apparatus is a fulcrum hinge,
b. Fixing said tongue plate to said buckle which is installed in the floor or on the wheel-side supporting apparatus,
c. Pulling and rolling the belt over the wheel as said tongue plate is leading said belt, which belt is installed on the opposite side of the belt from which the tongue plate is installed,
d. Fixing said tongue plate to the buckle which is installed in the floor or on the wheel-side supporting apparatus, as said belt is being pulled out from said retractor, and said belt is rolled over the wheel.

21. A process at least comprising the following procedure, in the method of using said apparatus which has said belt that on one end of which has tongue plate, and the other end of which is connected to said retractor, and wheel-side supporting apparatus which has said air bag in claim 1, 4, 5, 7,
a. Raising up one end of said wheel-side supporting apparatus from the floor as the other end of wheel-side supporting apparatus is a fulcrum hinge,
b. Inflating said air bag which is installed in said wheel-side supporting apparatus,
c. Rolling said belt over the wheel by pulling said belt out from said retractor which is installed in the floor or on the wheel-side supporting apparatus,
d. Pulling and rolling the belt over the wheel as said tongue plate is leading said belt,
e. Fixing said tongue plate to the buckle, as said belt is being pulled out, and rolling said belt over the wheel.

22. A process at least comprising the following procedure, in the method of using said apparatus which has said belt that on both ends of which have tongue plate, and wheel-side supporting apparatus which has said air bag in claim 2, 6, 8,
a. Raising up one end of said wheel-side supporting apparatus from the floor as the other end of wheel-side supporting apparatus is a fulcrum hinge,
b. Inflating said air bag which is installed in said wheel-side supporting apparatus,
c. Fixing said tongue plate to said buckle which is installed in the floor or on the wheel-side supporting apparatus.
d. Pulling and rolling the belt over the wheel as said tongue plate is leading said belt, which belt is installed on the opposite side of the belt from the tongue plate is installed,
e. Fixing said tongue plate to the buckle which is installed in the floor or on the wheel-side supporting apparatus, as said belt is being pulled out from said retractor, and rolling said belt over the wheel.

23. An automated wheel fixing apparatus that is comprised of an information collecting section which is installed beside the vehicle, and detects the position of the wheel of the vehicle and the position of the belt/buckle, a grasping section which grasps the belt/buckle, a pulling section which pulls the belt and rolls the belt over the wheel, an information treating section Which treats the collected information, a controller which regulates the operation of the grasping section and pulling section.

24. An automated wheel fixing apparatus that is comprised Of an information collecting section which is installed on the side of vehicle, and detects the position of the wheel of the vehicle and the position of the belt/buckle, a grasping section which grasps the belt/buckle, a pulling section which pulls the belt, and rolls the belt over the wheel, an injection section which injects the compressed gas (air) into the air bag through the valve which is installed on the wheel-side supporting apparatus, an information treating section which treats the collected information, a controller which regulates the operation of the grasping section and pulling section.

25. At the place where the vehicle is loaded/unloaded onto the pallet/truck to convert its mode, a mode-interchange that is equipped with a plurality of automated wheel fixing apparatuses installed along the guideway along which the pallet/truck is run.
